# FASCICULE DE BREVET EUROPEEN

(11) **EP 3 215 933 B1**
(45) Date de publication et mention de la délivrance du brevet: **26.09.2018**
(21) Numéro de dépôt: 15797879.2
(22) Date de dépôt: 03.11.2015
(51) Int. Cl.: G06F 9/30, G06F 9/38

(54) **PROCEDE ET DISPOSITIF D'ARCHITECTURE CONFIGURABLE A GROS GRAINS POUR EXECUTER EN INTEGRALITE UN CODE APPLICATIF**
VERFAHREN FÜR REKONFIGURIERBARE GROBKORNARCHITEKTUR UND VORRICHTUNG ZUR AUSFÜHRUNG EINES ANWENDUNGSCODES IN SEINER GANZHEIT
COARSE-GRAIN RECONFIGURABLE ARCHITECTURE METHOD AND DEVICE FOR EXECUTING AN APPLICATION CODE IN ITS ENTIRETY

(30) Priorité: 04.11.2014 FR 1460631
(43) Date de publication de la demande: 13.09.2017
(73) Titulaire: Commissariat à l'Énergie Atomique et aux Énergies Alternatives, 75015 Paris (FR); Universite De Bretagne Sud, 56100 Lorient (FR); Centre National de la Recherche Scientifique, 75016 Paris (FR)
(72) Inventeur: PEYRET, Thomas, 91300 Massy (FR); THEVENIN, Mathieu, 91400 Saclay (FR); CORRE, Gwenolé, 91190 Saint-Aubin (FR); COUSSY, Philippe, 56270 Ploemeur (FR); MARTIN, Kevin, 56600 Lanester (FR)
(74) Mandataire: Lopez, Frédérique
(86) Numéro de dépôt international: PCT/EP2015/075579
(87) Numéro de publication internationale: WO 2016/071330

(56) Documents cités:
- WO-A2-01/90915
- US-B1- 6 453 424
- KEHUAI WU ET AL: "MT-ADRES: Multithreading on Coarse-Grained Reconfigurable Architecture", 27 mars 2007 (2007-03-27), RECONFIGURABLE COMPUTING: ARCHITECTURES, TOOLS AND APPLICATIONS; [LECTURE NOTES IN COMPUTER SCIENCE;;LNCS], SPRINGER BERLIN HEIDELBERG, BERLIN, HEIDELBERG, PAGE(S) 26 - 38, XP019078159, ISBN: 978-3-540-71430-9 le document en entier

## Description

### Domaine de l'invention

L'invention concerne le domaine des architectures configurables à gros grains, en particulier une architecture de tuile de calcul et un modèle d'exécution associé pour exécuter des codes applicatifs dans leur intégralité.

### Etat de la Technique

Les architectures reconfigurables à gros grains (CGRA pour Coarse Grained Reconfigurable Architecture en anglais) sont de manière connue utilisées pour accélérer des coeurs de boucle d'un code applicatif. Le code applicatif est en général analysé et les coeurs de boucle sont séparés du reste du code pour être accélérés. La partie non linéaire du code (toute instruction de contrôle et de saut) est exécutée sur un processeur généraliste situé généralement à l'extérieur de l'architecture et est accessible par un bus par exemple et le CGRA n'est utilisé que pour les coeurs de boucle. Alternativement, un sous ensemble de l'architecture peut être utilisé pour exécuter ce code.

Classiquement, pour les architectures CGRAs, l'exécution d'une partie de code accélérée peut se décrire en 3 étapes : 1) les données sont chargées dans l'architecture CGRA par le processeur extérieur ; 2) le coeur de boucle est exécuté ; 3) les données sont récupérées par le processeur.

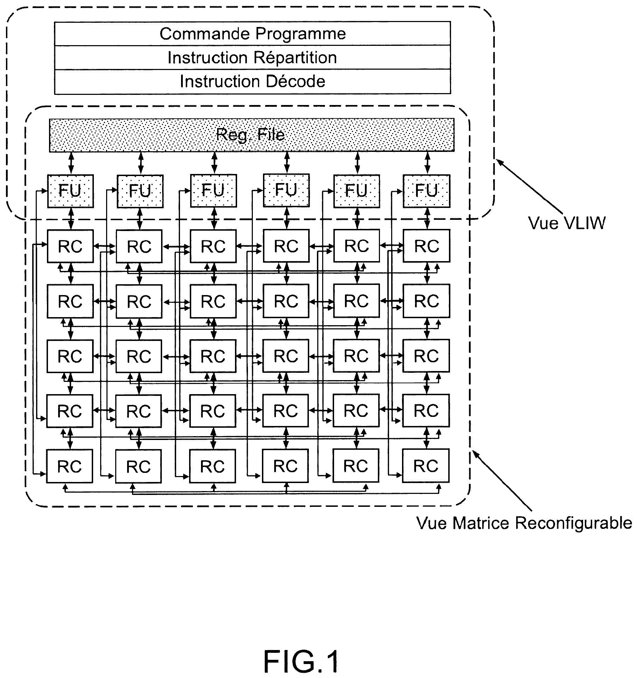

Ce modèle peut être amélioré en utilisant des composants comme des mémoires à accès direct (DMA pour Direct Memory Access en anglais) permettant d'accélérer les transferts de données, mais ceci reste peu efficace. Dans l'article de B. Mei, S. Vernalde, D. Verkest, H. De Man, and R. Lauwereins, "ADRES: An architecture with tightly coupled VLIW processor and coarse-grained reconfigurable matrix," in Field Programmable Logic and Application, P. Y. K. Cheung and G. Constantinides, Eds. Springer Berlin / Heidelberg, 2003, pp. 61-70, le CGRA ou matrice reconfigurable est directement couplé à une vue VLIW (Very Long Instruction Word en anglais). L'intégralité du CGRA est programmée pour exécuter un coeur de boucle particulier. En cas de changement de coeur de boucle ou passage dans une partie irrégulière, le CGRA doit être reconfiguré. Pour le reste du code, seule une sous-partie de l'architecture exécute les instructions à la manière d'un processeur généraliste remplaçant le processeur classiquement utilisé à côté du CGRA. Le lien entre les deux se fait par les ressources appartenant à la fois à la vue VLIW et à la vue CGRA. La figure 1 illustre une telle architecture.

Dans l'article de S. Pillement, O. Sentieys, and R. David, "DART: A Functional-Level Reconfigurable Architecture for High Energy Efficiency," EURASIP J. Embed. Syst., vol. 2008, pp. 1-13, 2008.4, le code est aussi séparé en deux. Les possibilités du CGRA ne sont exploitées en intégralité que pour les coeurs de boucle en créant des chemins de données spécifiques pour chacun de ces coeurs de boucles. Le reste du code est compilé en utilisant un sous ensemble restreint que le CGRA peut configurer à chaque coup d'horloge. Le contrôle n'est pas réalisé par le CGRA lui-même mais par une unité extérieure. Le passage d'une portion de code régulière à une autre portion, engendré par un saut, un redémarrage de boucle, un changement de fonction, par exemple, nécessite un temps de reconfiguration non nul, ici de 4 cycles, ce qui implique de limiter le nombre de changements de configuration.

Dans l'article de M. Lanuzza, S. Perri, P. Corsonello, and M. Margala, "A new reconfigurable coarse-grain architecture for multimedia applications," in Adaptive Hardware and Systems, 2007. AHS 2007. Second NASA/ESA Conférence on, 2007, une architecture CGRA originale est décrite. Chaque tuile de calcul possède en local une mémoire statique (SRAM) et une unité de contrôle. Il n'est cependant pas décrit de mécanisme permettant de gérer les changements dynamiques de contexte d'autant plus qu'il est précisé que le chemin de données ne change pas durant la phase d'exécution. Pour cette architecture, il semble que le CGRA soit configuré avant exécution et ne tolère pas de changement rapide de configuration.

Une nouvelle approche a été proposée dans l'article de A. Parashar, M. Pellauer, M. Adler, B. Ahsan, N. Crago, D. Lustig, V. Pavlov, A. Zhai, M. Gambhir, A. Jaleel, R. Allmon, R. Rayess, S. Maresh, and J. Emer, "Triggered instructions: A control paradigm for spatially-programmed architectures," in Proceedings of the 40th Annual International Symposium on Computer Architecture, ISCA'13, 2013, pp. 142-153. Dans cette architecture, les tuiles de calcul sont indépendantes dans l'exécution des instructions et il n'y a plus de flot de contrôle, ce dernier étant remplacé par des prédicats pour chacune des instructions. L'architecture est dite à « instructions déclenchées ». La structure générale de la tuile comporte une partie exécution assez classique avec des registres en local ainsi qu'une partie opérative (ALU). Chaque tuile peut recevoir des données de la part de ses voisins en fonction du réseau d'interconnexion. La particularité de cette architecture vient de la partie contrôle et de ses implications sur le reste de la tuile. Dans cette architecture, chaque tuile possède une mémoire d'instructions. Un prédicat est associé à chaque instruction et va permettre de savoir si l'instruction peut être exécutée à l'instant courant. Les instructions sont alors exécutées sans ordre prédéterminé « Out of order » et les prédicats permettent de s'assurer des dépendances de données. Dans le cas où plusieurs instructions peuvent être exécutées, un ordonnanceur élémentaire (composé de portes logiques ET) décide quelle est l'instruction la plus prioritaire. Les résultats/données possèdent tous un tag qui permet à l'unité de contrôle de savoir si le prédicat est vérifié. L'exécution sans ordre fixé des instructions impose à cette architecture de posséder une file de registres (RF) en entrée et en sortie de tuile afin de mémoriser les données qu'une tuile va potentiellement recevoir et délivrer. La problématique du contrôle devient celle de la détermination/création de prédicats ainsi que du chargement correct des instructions dans la mémoire d'instructions des tuiles. S'il n'y a pas d'instruction capable de s'exécuter dans la tuile, elle ne fera rien en attendant que des données utilisables soient produites par d'autres tuiles. De même, il faut que les données produites par une tuile puissent être utilisées par la tuile qui possède l'instruction adéquate. Bien que le contrôle soit distribué dans chaque tuile rendant l'architecture globale autonome et indépendante des autres tuiles, cette approche présente des inconvénients. En particulier, la génération des prédicats, qui n'est pas détaillée, semble être très complexe et pourrait engendrer des prédicats dont la longueur rendrait inutilisable l'architecture. Par ailleurs, l'ordonnancement n'est pas prédéterminé car il est fonction uniquement des instructions dont le prédicat est respecté et par un ordonnanceur matériel réalisé avec des portes logiques ET. Il n'est alors pas garanti que l'ordonnancement résultant soit de bonne qualité. De même, le placement des instructions sur les tuiles n'étant pas fixé, il peut ne pas favoriser la localité spatiale des données en les forçant à beaucoup se déplacer dans l'architecture. Enfin, l'aspect « Out of order » de l'exécution n'est pas propice à des certifications produit de qualité car changer une instruction dans le code peut changer l'intégralité de l'ordonnancement et du placement qui dépendent de la manière dont sont générés les prédicats.

Ainsi, il n'existe pas dans l'art antérieur de solution d'une architecture reconfigurable à gros grain qui permette l'exécution de l'intégralité d'un code applicatif.

Une autre problématique liée aux architectures CGRA n'est pas abordé par la littérature : la gestion des accès mémoires bloquants. En effet, il n'est jamais fait mention de la possibilité qu'une instruction d'accès à la mémoire, que ce soit une instruction de lecture (Load) ou d'écriture (Store), ne se termine pas au moment où l'instruction est réalisée. Ces opérations sont généralement représentées par un simple noeud d'opération ayant une durée de 1 cycle. Or selon les types de mémoires, en particulier les mémoires dites DDR RAM (Double Data Rate Random Access Memory), il peut exister un temps strictement supérieur à 1 cycle entre le moment où une donnée est demandée et le moment où elle est disponible sur le bus de sortie de la mémoire. L'ordre de grandeur pour une DDR est d'environ 10 cycles. Par ailleurs, certaines technologies mémoires peuvent nécessiter un rafraichissement pendant lequel il n'est pas possible d'accéder aux données. Ce temps peut être très long, des centaines, voire des milliers de cycles. Ainsi, c'est au concepteur d'assurer que la donnée sera bien disponible au moment où elle est demandée, de manière matériel en utilisant par exemple une file de registres. Ainsi, il n'existe pas dans l'art antérieur de solution d'une architecture reconfigurable à gros grain qui prenne en charge la gestion des accès mémoires bloquants. WO01/90915 décrit une matrice d'éléments processeurs assorties de plusieurs trains d'instruction et de plusieurs trains de données diffusés à tous les éléments processeurs.

Il existe alors le besoin d'une solution qui palie aux inconvénients des approches connues. La présente invention répond à ce besoin.

### Résumé de l'invention

Un objet de la présente invention est de proposer un dispositif unitaire de calcul ou tuile de calcul pour des architectures reconfigurables à gros grain (CGRA) permettant d'exécuter des codes applicatifs complexes possédant des opérations de contrôle.

Un autre objet de la présente invention est de proposer un procédé ou modèle d'exécution pour des architectures CGRA associé au dispositif de calcul.

Avantageusement, la solution proposée permet de traiter l'intégralité du code d'une application d'une seule et même façon, sans distinction particulière entre des parties dites irrégulières - les contrôles, les sauts - et les coeurs de boucle.

Avantageusement, le procédé de l'invention permet au CGRA d'être autonome pour exécuter le code d'une application et ne requière plus l'usage d'un processeur hôte.

Avantageusement, la présente invention permet d'intégrer au CGRA la gestion des structures de contrôle des codes applicatifs sans avoir à leur appliquer de prétraitement particulier. Toujours avantageusement, cette gestion est distribuée ce qui permet de tolérer des défaillances partielles du composant, au contraire d'une gestion centralisée qui rend l'intégralité du composant inopérant en cas d'apparition d'une faute permanente dans l'unité de contrôle centralisée.

Un autre avantage de la présente invention est de gérer les attentes bloquantes de données sans faire attendre l'intégralité du composant.

Avantageusement, la présente invention permet l'utilisation de graphes de type Control Data Flow Graph (CDFG), plutôt que de limiter l'architecture aux graphes de type Data Flow Graph (DFG) qui obligent le déroulage des boucles et la suppression du flot de contrôle.

La présente invention trouvera une application avantageuse dans les domaines de l'aéronautique, l'aérospatial, la robotique, l'automobile ou la défense.

Pour obtenir les résultats recherchés, un dispositif et un procédé sont proposés.

En particulier, un dispositif de calcul pour architecture configurable à gros grains comprenant une pluralité de dispositifs de calcul interconnectés par un bus de données, comprenant :
- une partie opérative apte à exécuter des instructions opératives d'un code applicatif, et à transmettre des données vers et recevoir des données, des dispositifs de calcul via le bus de données ;
- une mémoire programme comprenant des mots mémoires, chaque mot mémoire étant composé d'un premier champ (Op) contenant une instruction à exécuter, un second champ (TS) contenant un instant d'exécution et un troisième champ (ID) contenant un identifiant de bloc d'instructions ; et
- une unité de contrôle couplée à la partie opérative et à la mémoire programme, apte à piloter au sein du dispositif de calcul l'exécution d'une instruction, et à transmettre vers et recevoir d'autres unités de contrôle, des identifiants de bloc d'instructions via un bus de gestion du contrôle (GSG), ledit bus interconnectant les unités de contrôle de la pluralité des dispositifs de calcul.

Dans un mode de réalisation, la partie opérative comprend des composants d'exécution et des composants de mémorisation.

Dans un mode de réalisation, l'unité de contrôle comprend au moins un compteur de cycle, un pointeur d'instruction, une table de localisation permettant de connaitre la position dans la mémoire programme de la première instruction de chaque bloc d'instructions et un registre permettant de stocker l'identifiant du bloc d'instructions courant.

Avantageusement, l'unité de contrôle comprend aussi des moyens permettant de ne pas incrémenter le pointeur d'instruction et de faire exécuter une instruction NOP.

Dans un mode de réalisation, le bus de gestion du contrôle (GSG) permet de communiquer à la pluralité des unités de contrôle un signal signifiant que l'identifiant d'un nouveau bloc d'instructions est présent sur ledit bus.

Avantageusement, le dispositif de l'invention comprend dans un mode de réalisation des moyens pour gérer des instructions mémoires bloquantes.

Dans une implémentation, les moyens pour gérer des instructions mémoires bloquantes comprennent au moins un bus de freeze (FG, RCBB) interconnectant les unités de contrôle de la pluralité des dispositifs de calcul permettant de bloquer globalement ou partiellement l'exécution d'instructions.

De manière préférentielle, les mots mémoires ont des champs de taille prédéfinie.

Dans un mode de réalisation, la mémoire programme contient une instruction de contrôle ayant un identifiant de bloc d'instructions dédié et un instant d'exécution fixé définissant le prochain bloc d'instructions à exécuter.

L'invention couvre aussi un procédé pour opérer le dispositif de calcul dans ses différents modes de réalisation. En particulier, le procédé comprend au moins les étapes suivantes :
- pointer un mot mémoire dans la mémoire programme par le pointeur d'instruction de l'unité de contrôle ; et
- envoyer à la partie opérative un NOP si l'identifiant du bloc d'instructions du mot pointé n'est pas le même que celui stocké dans l'unité de contrôle ou si l'instant d'exécution n'est pas le même que la valeur du compteur de cycle de l'unité de contrôle ; ou
- envoyer à la partie opérative l'instruction correspondante si l'identifiant du bloc d'instructions du mot pointé est le même que celui stocké dans le registre de l'unité de contrôle, et si l'instant d'exécution est le même que la valeur du compteur de cycle de l'unité de contrôle.

Dans une variante, le procédé comprend de plus dans le cas où l'instruction a été exécutée, une étape d'incrémenter le pointeur d'instruction et le compteur de cycle.

Dans une autre variante, le procédé comprend de plus l'étape d'exécuter l'instruction de contrôle dans le cas où le pointeur d'instruction pointe vers l'instruction de contrôle.

Dans une autre variante, le procédé comprend de plus l'étape de communiquer sur le bus de gestion du contrôle (GSG) l'identifiant du bloc d'instructions et un signal indiquant qu'un nouvel identifiant de bloc d'instructions est généré.

Dans une autre variante, l'invention couvre un procédé pour opérer un dispositif de calcul comprenant au moins les étapes suivantes pour bloquer globalement l'exécution d'instructions :
- envoyer à l'unité de contrôle un signal de Load bloquant si une donnée requise n'est pas disponible en mémoire centrale ;
- passer le bus de freeze en état actif ;
- bloquer l'incrémentation du pointeur d'instruction et du compteur de cycle dans toutes les tuiles ; et
- exécuter une instruction NOP tant que la donnée requise n'est pas arrivée dans la tuile.

Une partie de l'invention peut opérer sous la forme d'un produit programme d'ordinateur qui comprend des instructions de code permettant d'effectuer les étapes du procédé revendiqué lorsque le programme est exécuté sur un ordinateur.

### Description des figures

Différents aspects et avantages de l'invention vont apparaitre en appui de la description d'un mode préféré d'implémentation de l'invention mais non limitatif, avec référence aux figures ci-dessous :
La figure 1 illustre une architecture CGRA de l'art antérieur;
La figure 2 illustre un réseau d'interconnexion des tuiles pour une architecture CGRA selon un mode de réalisation de l'invention;
La figure 3 illustre les blocs fonctionnels d'une tuile de calcul de l'architecture de la figure 2, dans un mode de réalisation de l'invention ;
La figure 4 illustre une architecture de tuile de calcul selon l'invention permettant de gérer les accès mémoires bloquants dans un premier mode de réalisation ;
La figure 5 illustre une architecture de tuile de calcul selon l'invention permettant de gérer les accès mémoires bloquants dans un second mode de réalisation ;
La figure 6 illustre la propagation sur les tuiles de calcul d'un nombre de cycles ;
Les figures 7a et 7b illustrent des variantes d'implémentation du dispositif de l'invention.

### Description détaillée de l'invention

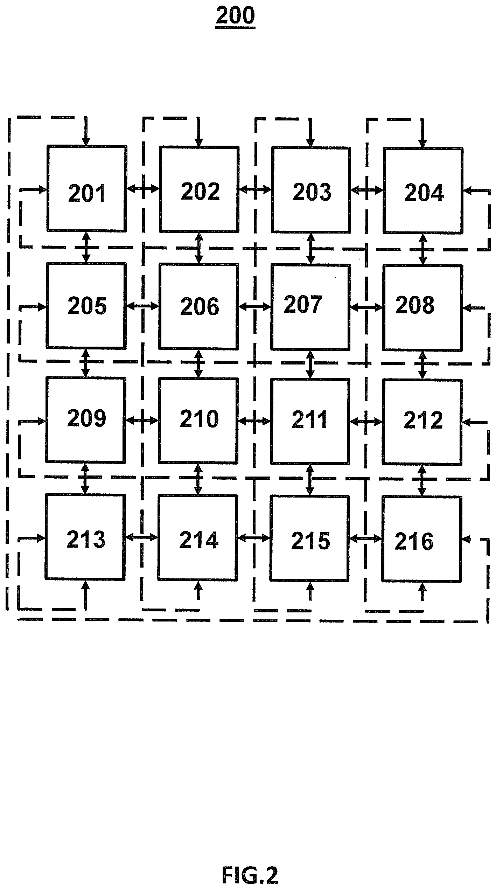

Référence est faite à la figure 2 qui illustre de manière simplifiée, une architecture de type CGRA 200 selon les principes de l'invention. Le CGRA comprend une pluralité de tuiles de calculs (210 à 216) qui sont interconnectées selon un réseau d'interconnexion, représenté par l'ensemble des flèches pleines et pointillées sur la figure. Selon la définition du réseau d'interconnexion, chaque tuile va avoir un certain nombre de tuiles voisines - ses voisins - vers qui émettre des données ou en recevoir via un bus de données. Dans l'exemple simplifié de la figure 1, chaque tuile de calcul a quatre voisins, telle la tuile 206 qui a pour voisins les tuiles 202,205, 207 et 210, ou encore la tuile 215 qui a pour voisins les tuiles 211,214,216 et 203. L'homme de l'art comprendra que l'exemple choisi n'est pas limitatif et que la présente invention peut s'implémenter pour tout arrangement du réseau d'interconnexion et quel que soit le nombre de tuiles d'une architecture.

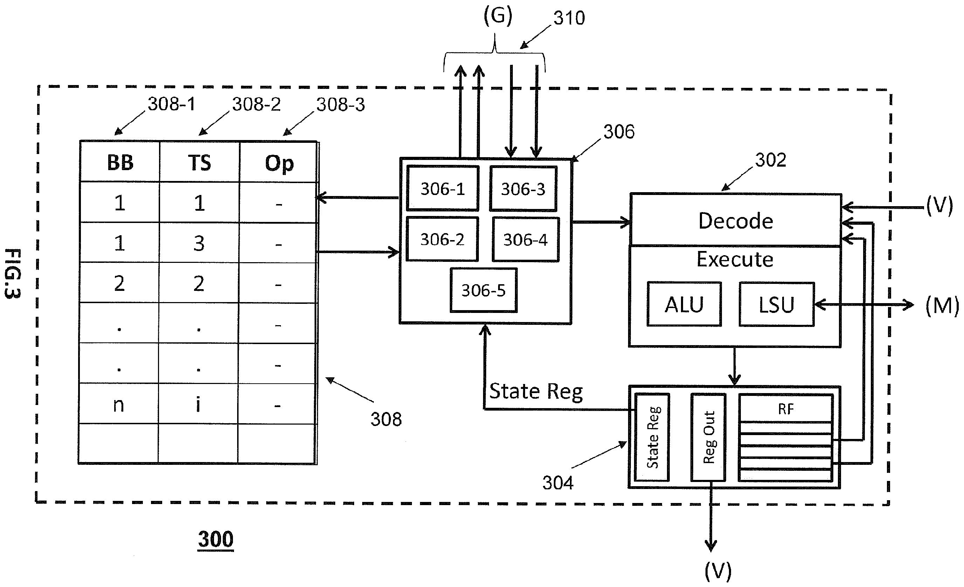

Référence est faite à la figure 3 qui illustre les composants d'une tuile de calcul 300 selon le principe de l'invention, qui peut indifféremment être l'une des tuiles 201 à 216 de la figure 2. La tuile comprend une partie opérative (302, 304) pour exécuter les instructions opératives d'un code applicatif. La partie opérative comprend des composants d'exécution (302) bien connus tels une ALU (Arithmetic Logic Unit en anglais), une LSU (Load Store Unit en anglais), des décodeurs, couplés à des composants de mémorisation (304) tels des files de registres (RF), des registres de sorties (Reg Out), des registres d'état (State Reg). L'homme du métier appréciera qu'il ne soit pas apporté plus de détails sur ces composants bien connus dans les CGRAs traditionnels.

La tuile de calcul comprend de plus une unité de contrôle (306) couplée à la partie opérative (302, 304) et permettant de contrôler l'exécution de l'instruction courante. L'unité de contrôle pilote un décodeur de la partie opérative en lui fournissant une instruction à exécuter. L'unité de contrôle communique de plus vers les autres tuiles de calcul par un bus (310) commun aux tuiles, et dédié à la gestion des instructions de contrôle et de sauts.

L'ensemble des instructions (opératives et de contrôle) est opéré par une configuration qui est stockée dans une mémoire programme (308). La mémoire programme 308 est pilotée par un pointeur d'instruction situé dans l'unité de contrôle de la tuile et qui permet de pointer le mot mémoire courant. Les mots mémoires sont composés de trois champs (308-1, 308-2, 308-3). Un premier champ BB (308-1) contient un identifiant de bloc d'instructions ; un deuxième champ TS (308-2) contient un instant d'exécution (TS pour Time Stamp en anglais) pour chaque Basic Block ; un troisième champ Op (308-3) contient une instruction qui pilote les opérateurs, les multiplexeurs, les registres (302, 304).

Dans la suite de la description, un bloc d'instructions ou bloc basique ou « Basic Block BB en anglais » désigne un ensemble d'instructions de calculs (opératives) qui ne contient pas d'instruction de contrôle intermédiaire. Un tel bloc est identifié par un identifiant (ID) de bloc basique ou identifiant de bloc d'instructions.

De manière préférentielle, les mots mémoires ont des champs de taille prédéfinie pour gérer le contrôle. L'ordonnancement et le placement des entrées dans la mémoire programme sont réalisés avant l'exécution par un flot dédié. Dans un mode de réalisation préférentielle, ces opérations d'ordonnancement et placement sont telles que décrites dans les articles suivants :
- T. Peyret, G. Corre, M. Thevenin, K. Martin, and P. Coussy, "Efficient Application Mapping on CGRAs based on Backward Simultaneous Scheduling/Binding and Dynamic Graph Transformations," in Application-specific Systems, Architectures and Processors, 25th IEEE International Conference on, 2014;
- T. Peyret, G. Corre, M. Thevenin, K. Martin, and P. Coussy, "Ordonnancement, assignation et transformations dynamiques de graphe simultanés pour projeter efficacement des applications sur CGRAs," in Conférence en Parallélisme, Architecture et Système (ComPAS'2014), 2014 ;
- T. Peyret, G. Corre, M. Thevenin, K. Martin, and P. Coussy, "An Automated Design Approach to Map Applications on CGRAs," in Great Lakes Symposium on VLSI (GLSVLSI'14), 2014.

L'aspect « In order » de ces processus est plus propice à la certification et la validation.

Avantageusement, l'architecture de tuiles de la présente invention nécessite moins de registres dans chaque tuile que celle présentée dans l'article de A. Parashar, M. Pellauer, M. Adler, B. Ahsan, N. Crago, D. Lustig, V. Pavlov, A. Zhai, M. Gambhir, A. Jaleel, R. Allmon, R. Rayess, S. Maresh, and J. Emer, "Triggered instructions: A control paradigm for spatially-programmed architectures," in Proceedings of the 40th Annual International Symposium on Computer Architecture, ISCA'13, 2013, pp. 142-153. En effet, il n'est pas besoin d'une file de registres d'entrée, et les registres sont de plus petite taille que dans cette solution, car il n'y a pas de tag associé à la donnée, ceci réduisant la probabilité d'apparition d'une faute (dans un contexte de tolérance aux fautes).

Pour adresser les Basic Blocks de la mémoire programme, l'unité de contrôle 306 comprend un compteur de cycle (306-1), un pointeur d'instruction (306-2) et une table de localisation (306-3) permettant de connaitre la position dans la mémoire programme de la première instruction de chaque Basic Block, ainsi qu'un registre (306-4) permettant de connaître l'ID du BB courant. L'unité de contrôle 306 comprend aussi des moyens (306-5) de « garder » une instruction permettant de ne pas incrémenter le pointeur d'instruction et de faire exécuter une instruction « NOP » (No Opération) à la place.

En plus du réseau d'interconnexion pour les échanges de données reliant les tuiles entre elles par le bus de données (bus « voisins » (V) sur la figure), un bus 310 de gestion des sauts (GSG) relie toutes les unités de contrôle des tuiles entre elles. Le bus de gestion des sauts possède une partie pour communiquer les identifiants de Basic Blocks, et une partie pour communiquer un signal signifiant que l'identifiant d'un nouveau Basic Block est présent sur le bus.

Le mode opératoire d'une tuile 300 est alors le suivant :
- le pointeur d'instruction de l'unité de contrôle 306 pointe vers un mot mémoire dans la mémoire programme 308;
- si l'ID du basic block contenu dans le mot pointé n'est pas le même que celui stocké dans l'unité de contrôle, alors l'instruction (Op) n'est pas exécutée et un NOP est envoyé à la partie opérative (302) ;
- si l'ID du basic block contenu dans le mot est le même que celui stocké dans le registre de l'unité de contrôle l'ID, et si l'instant d'exécution (TS) est le même que la valeur du compteur de cycle de l'unité de contrôle, alors l'instruction (Op) est envoyée au décodeur (302) ; si l'instant d'exécution (TS) n'est pas le même que la valeur du compteur de cycle de l'unité de contrôle, un NOP est envoyé à la partie opérative (302) ;
- dans le cas où l'instruction (Op) a été exécutée, le pointeur d'instruction et le compteur de cycle sont incrémentés.

La représentation des codes applicatifs se fait par des graphes de flots de données ou Data Flow Graph (DFG) selon l'anglicisme reconnu. En général un coeur de boucle est représenté par un Data Flow Graph (DFG) simple qui représente une succession linéaire d'instructions. Les codes d'application sont en général représentés par des graphes de type « Control Data Flow Graph » (CDFG). Un CDFG est composé de blocs basiques BB équivalents à des DFGs auxquels une instruction de contrôle est ajoutée à la fin qui permet de déterminer le prochain BB à devoir être exécuté. Cette instruction particulière est appelée un saut. Le saut peut être conditionnel ou inconditionnel. Le saut est inconditionnel si le BB vers lequel il pointe est fixe, ou est conditionnel si le BB d'arrivée dépend d'une valeur calculée précédemment, comme par exemple le résultat d'un test d'arrêt de boucle « for/while » ou une instruction « if ». Dans un modèle CDFG standard, il n'y a qu'une seule instruction de saut par BB en dernière position.

Dans le modèle CDFG de la présente invention, après le processus de projection (ordonnancement et placement), une seule tuile de calcul parmi l'ensemble des tuiles du CGRA possède une instruction de contrôle. Cette instruction est écrite en mémoire programme. Elle possède un ID de Basic Block dédié et un instant d'exécution TS fixé. Le fonctionnement de la tuile dite tuile de gestion de saut est alors le suivant quand le pointeur d'instruction de l'unité de contrôle 306 pointe vers l'instruction de contrôle ;
- l'ID du BB correspondant ainsi que l'instant temporel TS étant corrects, l'instruction de contrôle est exécutée ;
- si l'instruction est conditionnelle, l'unité de contrôle 306 va lire la valeur du registre d'état pour savoir quel est le prochain basic block BB à être exécuté. Une instruction peut être conditionnelle par exemple dans le cas où l'arrêt d'une boucle dépend du résultat d'une comparaison ;
- si l'instruction est inconditionnelle, l'ID du prochain basic block BB est connu. Il peut s'agir du cas par exemple où il est écrit dans le mot mémoire en tant qu'« immédiat » (valeur constante écrite directement dans l'instruction mémoire);
- l'unité de contrôle de la tuile qui a l'instruction de saut connait donc l'ID du prochain basic block. La valeur de cet identifiant est écrit sur le bus de gestion des sauts (GSG) et un signal indiquant qu'il y a un nouvel ID de BB est généré.

Toutes les tuiles de la CGRA étant couplées au bus de gestion des sauts, enregistrent dans l'unité de contrôle la valeur du nouvel ID et le compteur de cycles est remis à zéro. La valeur du pointeur d'instruction est ensuite réinitialisée grâce à la table des premières instructions de BB (306-3). Lorsque le signal de nouvel ID revient est reseté et remis à son état initial, toutes les tuiles recommencent à incrémenter le compteur de cycles. Ainsi, toutes les tuiles ont le même cycle au même instant, avec une reprise de fonctionnement synchrone.

Dans une variante d'implémentation, l'architecture peut être à mémoire programme centrale. L'ensemble des mémoires programmes et des unités de gestion de contrôle (306) sont fusionnées. Cependant, cette variante à mémoire centrale n'est réaliste qu'en cas de petite architecture CGRA ayant un petit nombre de tuiles (par exemple 2x2 ou 3x3), du fait de la quantité de liens nécessaires qui fera chuter drastiquement la fréquence de fonctionnement et diminuera alors l'intérêt de l'architecture.

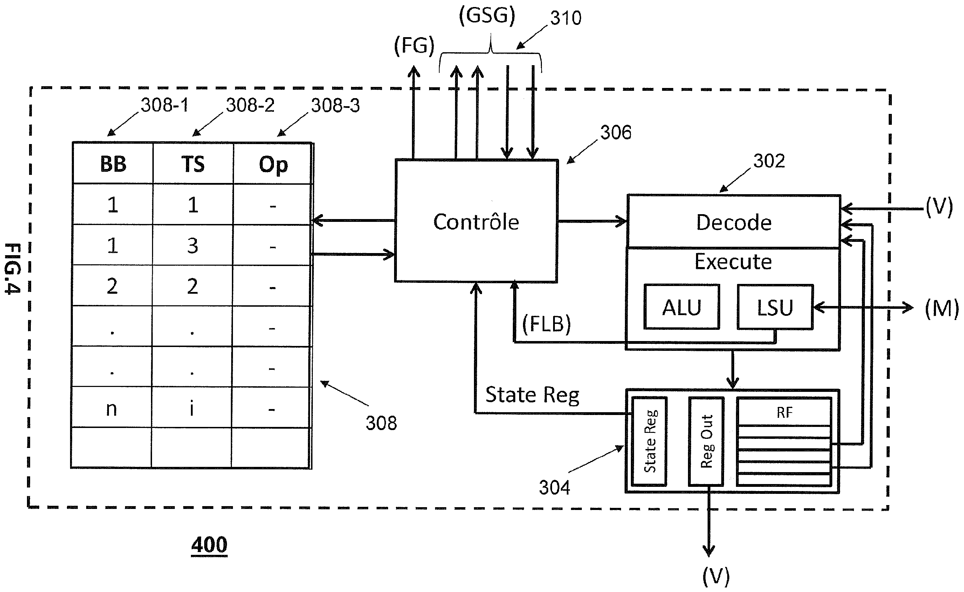

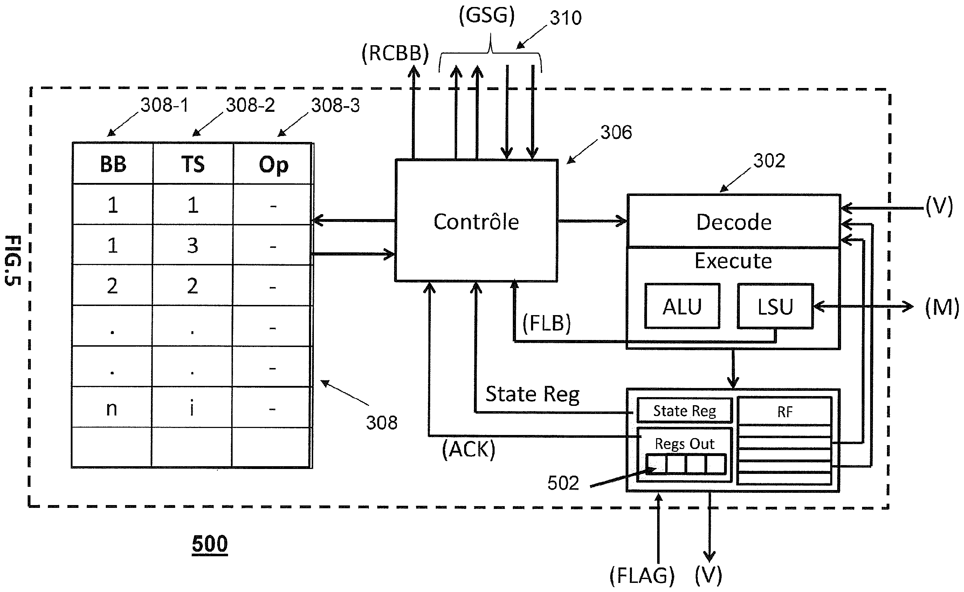

Référence est maintenant faite aux figures 4 et 5 qui illustrent dans des implémentations préférentielles, des architectures de tuile de calculs selon l'invention permettant de gérer les accès mémoires bloquants. Il est à noter que les éléments identiques à ceux de la figure 3 ont les mêmes références. Comme expliqué précédemment, bien qu'il n'en soit généralement pas fait mention dans la littérature CGRA, il existe la possibilité qu'une instruction d'accès à la mémoire ne se termine pas à moment où l'instruction est réalisée, c'est-à-dire que la donnée demandée ne soit pas disponible à l'instant où elle est censée l'être. Dans le cadre de cette invention, des moyens de gérer et matériellement et au niveau du modèle d'exécution les accès à la mémoire dont la durée est incertaine sont décrits. La gestion des instructions mémoires bloquantes, en particulier le Load bloquant, peut se faire de deux façons différentes en fonction des besoins utilisateurs.

La première façon, illustrée par l'implémentation de la figure 4, consiste à avoir un bus dédié dit bus de « freeze » global (FG), commun à toutes les tuiles permettant de signaler un arrêt global du fonctionnement. Le fonctionnement d'une tuile en cas de Load bloquant est le suivant :
- à la fin d'une instruction de lecture mémoire, si la Load Store Unit (LSU) constate que la donnée requise n'est pas disponible en mémoire centrale (M), elle envoie un signal de Load bloquant (FLB) à l'unité de contrôle (306) ;
- l'unité de contrôle va permettre au bus (FG) de « freeze » global de passer dans son état actif ;
- ceci a pour effet d'empêcher le pointeur d'instruction et le compteur de cycle de s'incrémenter dans toutes les tuiles ;
- tant que la donnée requise n'est pas arrivée dans la LSU, l'ensemble des tuiles du CGRA exécutera une instruction NOP forcée par le signal de « freeze » ;
- quand la donnée requise est arrivée de la mémoire centrale dans la LSU, cette dernière envoie un signal d'information à l'unité de contrôle qui repasse le bus global de freeze (FG) dans son état inactif ;
- le compteur de cycle ainsi que, le cas échéant, le pointeur d'instruction, s'incrémentent.

La figure 5 illustre une seconde variante d'implémentation permettant de gérer les Load bloquants. Cette variante permet d'éviter de stopper l'intégralité de l'exécution en cas de Load bloquant, et stopper seulement certaines parties du composant. En effet, la donnée qui est chargée n'étant utilisée que par une partie de la suite des instructions du basic block BB, il est intéressant de ne bloquer que cette partie de l'exécution. Chaque tuile possédant un registre de sortie (Reg Out), un champ supplémentaire (502) est ajouté pour chaque voisin, et va agir comme un signal de flag (FLAG) permettant d'une part de signaler aux voisins utilisant la donnée qu'il y a une valeur de disponible et d'autre part d'enregistrer si la valeur a été lue par le voisin. Au niveau du réseau d'interconnexion, ceci impose que les voisins puissent signaler la lecture de la donnée par une remise à zéro du bit signalant qu'une donnée est disponible, grâce au bus FLAG. En contrôlant l'état de ces accusés de lecture (lien ACK), l'unité de contrôle (306) maintient le blocage de l'exécution ou bien la reprend. Comme l'exécution est partiellement bloquée, un signal global « Ready Change BB » (RCBB) délivré par l'unité de contrôle (306) à toutes les tuiles, permet de bloquer le changement de basic block, afin de ne pas autoriser un saut s'il reste des instructions du BB courant à exécuter dans n'importe quelle tuile de l'architecture. L'unité de contrôle de chacune des tuiles peut lire et piloter le signal RCBB, et chaque tuile peut prendre la main dessus. Si aucune tuile ne force le signal (RCBB), il est maintenu à l'état OK, signalant qu'il est possible de changer de basic block BB. Si une tuile (ou plus) n'est pas prête, le signal RCBB est forcé à l'état inverse (« Not OK »).

Dans le cas où le signal n'est pas dans son état OK, l'exécution d'un changement de BB est « gardée ». Les unités de contrôle des tuiles forcent le signal dans son état inverse (Not OK) tant qu'il reste des instructions du BB courant dans la mémoire. Cette vérification peut être faite en vérifiant si l'ID du BB de l'instruction pointée par le pointeur d'instruction est celle du BB courant. En effet, lorsque pour une tuile donnée, la dernière instruction du BB courant est exécutée, le pointeur d'instruction est incrémenté et il pointe alors vers une instruction d'un autre BB.

Le fonctionnement global est alors le suivant :
- Dans le cas d'une instruction classique où il n'y a pas de saut, le résultat du calcul de l'instruction courante à destination des voisins est écrit dans le registre de sortie. Les champs flags (502) correspondants à ces voisins sont changés pour signaler qu'une donnée est disponible. Les autres flags 502 sont laissés dans leur état « pas de donnée valide ».
- Si une tuile est bloquée, par un Load par exemple, les flags de ses registres de sortie (502) restent dans l'état « pas de donnée valide » et le compteur de cycle et le pointeur d'instruction ne sont pas incrémentés. La tuile reste bloquée tant que la donnée n'est pas disponible. Lorsque celle-ci devient disponible, elle est écrite dans les registres nécessaires (selon le besoin) et les champs flags (502) sont mis à jour, signalant qu'une donnée est disponible pour les voisins devant la lire.
- Lorsqu'une tuile utilise au moins une donnée provenant d'une autre tuile, elle vérifie que les champs flags 502 des voisins correspondants sont dans l'état signalant que les données sont disponibles. Si c'est le cas pour toutes les données qu'elle doit lire, elle met ce ou ces flag(s) à son/(leur) état initial pour signaler à la tuile productrice que la/les donnée(s) a(ont) bien été lue(s) grâce au bus (FLAG). Si ce n'est pas le cas, aucun flag n'est changé, la tuile se bloque, et exécute un NOP sans incrémenter le compteur de cycles et le pointeur d'instruction.
- En début d'un cycle, l'unité de contrôle vérifie via le bus (ACK) que l'intégralité des données qui devaient être consommées l'ont été. Si c'est le cas, la nouvelle instruction est exécutée si elle le peut comme définit précédemment, c'est-à-dire si l'ID du BB est la bonne et si l'instant d'exécution correspond. Si au moins un des voisins n'a pas consommé sa donnée, alors la tuile se bloque.
- Lorsqu'une instruction de contrôle doit être exécutée, elle ne peut l'être que si le signal « Ready Change BB » (RCBB) est à l'état OK. Le bus (GSG) est alors piloté comme précédemment décrit.

Dans une variante d'implémentation, les registres de sortie sont remplacés par des FIFOs (First In First Out) à plusieurs places. Dans ce cas, une tuile dont les résultats n'ont pas été consommés peut ne pas être bloquée tant qu'il reste de la place dans les FIFOs. Cette implémentation nécessite une FIFO différente par voisin. Le test ACK revient alors à vérifier si une FIFO est pleine. La mise à jour par FLAG consiste simplement à lire la donnée dans la FIFO, ce qui aura pour effet de l'enlever.

De manière à autoriser plusieurs codes à s'exécuter sur un même composant CGRA, tel que par exemple sur un CGRA de 4x4 tuiles à faire s'exécuter un code sur les deux premières lignes et un second sur les deux dernières, un cloisonnement des signaux de contrôle peut être ajouté de manière à définir des zones hermétiques vis-à-vis du contrôle. Ainsi, un Load bloquant sur un code ne bloquera pas l'autre. Pour cela, le bus de gestion de saut global (GSG) et le bus de gestion des accès bloquant (FG ou RCBB) peuvent être par exemple des bus segmentés configurables.

Dans une variante d'implémentation, la gestion des sauts n'utilise pas un bus global mais une transmission de message de proche en proche. Un tel mécanisme permet de diminuer le chemin critique au niveau de l'unité de contrôle et donc d'augmenter la fréquence de fonctionnement. Cependant, cette implémentation nécessite un plus grand nombre de cycles lors d'un changement de basic block BB de manière à synchroniser les débuts d'exécution des différentes tuiles. Une façon d'effectuer cette synchronisation est de propager, en même temps que le nouvel ID de BB, une valeur définissant le nombre de cycles restants avant de débuter l'exécution des instructions du nouveau BB. Cette valeur est décrémentée à chaque fois que l'information traverse une tuile. Elle vaut initialement la plus grande distance entre deux tuiles voisines. Ainsi, lorsque cette valeur passe à zéro, la tuile la plus éloignée a reçu le nouvel ID de BB et peut démarrer de façon synchrone.

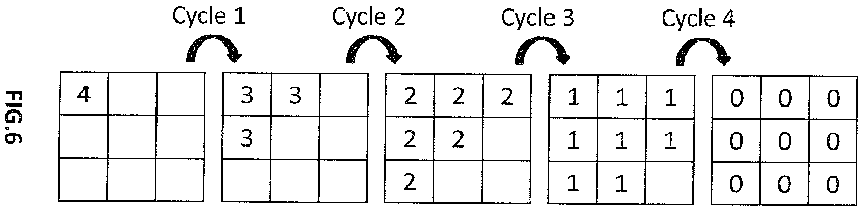

La figure 6 présente un exemple de propagation de la valeur du nombre de cycles restants dans le cas d'un CGRA 3x3 avec une communication restreinte aux plus proches voisins (haut, bas, gauche et droite). Dans cet exemple, la tuile du haut à gauche initie le changement de basic block. Elle a pour l'exemple une distance de Manhattan de 4 avec la tuile du bas à droite. Il est alors nécessaire de propager pendant 4 cycles le changement de BB, en décrémentant la valeur initiale de « 4 » à chaque propagation. Quand la valeur est à zéro pour toutes les tuiles, la première instruction du nouveau basic block est exécutée.

Dans un autre mode de réalisation les accès mémoires sont séparés en deux parties de manière à les rendre plus flexibles. Une première partie, le « Begin Load », permet d'informer le contrôleur mémoire qu'un élément de calcul veut avoir une donnée située à une certaine adresse envoyée à la mémoire centrale avec le Begin. Après un nombre de cycles fixés et dépendants de la technologie mémoire, la tuile exécute la seconde partie, le « End Load ». Dans cette seconde partie, le contrôleur mémoire est interrogé pour récupérer directement la donnée demandée. Si la donnée n'est pas encore disponible, la tuile passe en état bloqué et se retrouve dans les cas précédemment décrits de Load s bloquants.

Dans une variante améliorée, le Begin Load et le End Load ne sont pas émis par une même tuile. Cette implémentation se justifie par le fait que les données lues le sont généralement à une adresse calculée lors de l'exécution par une tuile et que le Load se trouve donc souvent sur le chemin critique. Ainsi, seule la seconde partie du Load augmente la latence, la première pouvant être réalisée sur une tuile qui n'effectue rien quelques cycles auparavant. Ce cas peut se présenter souvent quand l'architecture possède plus de ressources que ce que le parallélisme intrinsèque de l'application ne permet d'exploiter.

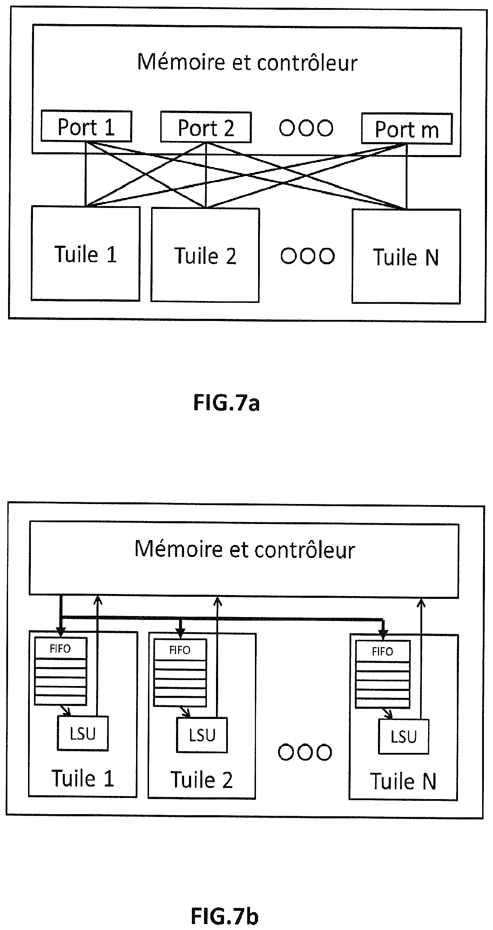

De nombreuses implémentations de ce mode de réalisation sont possibles, et deux exemples sont illustrés sur les figures 7a et 7b.

Dans une première version illustrée sur la figure 7a, plutôt utilisée dans le cas d'un CGRA avec un petit nombre de tuiles de calcul, le Begin Load contient l'adresse de la donnée en mémoire et un port sur lequel le contrôleur mémoire va présenter la valeur. Le contrôleur mémoire a un certain nombre de ports de communication (Port 1, 2, ...,m) dans lesquels les Begin Load viennent écrire l'adresse de la donnée à récupérer. Le contrôleur mémoire, en interne, vient écrire dans le registre du port de sortie la valeur de la donnée. Puis la tuile qui exécute le End Load lit cette donnée dans le bon port du contrôleur pour la mettre dans ses registres internes. Ce type d'implémentation nécessite que chacune des tuiles soit connectée aux différents ports de sortie de la mémoire. Ainsi pour des raisons de « fanout » elle reste adaptée pour des configurations ayant un nombre de tuiles restreint. Cette implémentation présente l'avantage de permettre à une seule commande « Begin Load » d'être utilisable par plusieurs tuiles. En effet, si non pas un seul mais plusieurs « End Load » sont reliés, et ordonnancés au même cycle mais pas sur les mêmes tuiles, la donnée peut être récupérée à plusieurs endroits simultanément dans l'architecture. Ceci permet de diminuer le nombre d'utilisations directes de la donnée en provenance d'un seul lieu. Ainsi, le placement est facilité et la pression sur l'interconnexion diminuée.

Dans une seconde version, illustrée en figure 7b, le « Begin Load » donne à la mémoire l'adresse de la donnée à chercher, mais aussi l'identifiant de la tuile qui doit la recevoir. Ce mécanisme permet aussi de ne pas obliger cette partie du Load à être exécutée sur la tuile qui aura besoin de la donnée. Les tuiles disposent alors d'un port d'entrée connecté au contrôleur mémoire. Dans la tuile, une FIFO tampon (ou un autre dispositif de mémorisation) est présente pour stocker les données envoyées par le contrôleur mémoire. C'est alors le contrôleur de la mémoire qui va écrire dans la FIFO dédiée de la tuile qui en a besoin. Au moment du « End Load », le contrôleur vérifie sur cette tuile que la donnée est présente dans la FIFO. Si ce n'est pas le cas, la tuile passe en état bloqué. Si c'est le cas, la donnée est transférée dans un ou plusieurs registres de la tuile (registre file RF et/ou registre de sortie) puis utilisée. L'avantage de la FIFO tampon est de réceptionner les résultats de plusieurs requêtes en mémoire et de les stocker momentanément le temps de les récupérer. En effet, une tuile peut ne pas faire qu'un seul accès à la mémoire et le temps que met la mémoire pour écrire la valeur dans la tuile n'est pas constant. Une FIFO permet donc d'autoriser plusieurs réceptions de données à plusieurs instants différents sachant que les données seront lues dans l'ordre de leur arrivée (qui est le même que l'ordre des requêtes). Un outil d'ordonnancement et de placement permet de faire en sorte que tous les utilisateurs aient la donnée demandée. Pour permettre l'envoi de la donnée à plusieurs tuiles, le « Begin Load » donne au contrôleur mémoire tous les identifiants des différentes tuiles destinatrices.

Une amélioration commune aux implémentations des figures 7a et 7b est que le module de mémorisation ait son propre programme stocké dans une mémoire d'instructions interne. Ce programme est composé des mêmes champs que ceux des tuiles, c'est-à-dire d'un champ d'identifiant ID pour le basic block courant, d'un champ instant d'exécution (TS) et d'un champ (Op) pour l'instruction à exécuter. Les instructions sont essentiellement des « Begin Load » dont les adresses sont en principe connues et statiques. Si ce n'est pas le cas, les tuiles de calcul fournissent l'adresse du Load. Dans une implémentation plus gourmande en ressources de calcul, toutes les adresses pour tous les Loads sont calculées par la mémoire. Les End Loads sont exécutés dans les tuiles de calcul.

Dans ce contexte, où la mémoire possède de la logique de décodage et/ou de calcul, une variante permet d'autoriser plusieurs End Loads dans plusieurs tuiles dans le cas de l'implémentation FIFO du paragraphe précédent, et ce sans avoir des mots de commande de taille variable. L'instruction « Begin Load » ne contient pas les identifiants des tuiles destinatrices, mais un identifiant d'un groupe de tuiles destinatrices. Le contrôleur mémoire écrit dans les FIFOs de toutes les tuiles du groupe, la valeur de la donnée stockée en mémoire. Ces groupes, qui sont connus lors de la compilation, peuvent être écrits dans la mémoire programme comme des constantes/variables lors de la programmation ou de l'initialisation par exemple, ou bien, si l'architecture le permet, créés pendant l'exécution par le programme de la tuile-mémoire, les groupes devant être déterminés avant que le reste du programme n'en ait besoin. Cet impératif impose au dispositif d'ordonnancement de respecter des contraintes de précédence supplémentaires.

## Revendications

1. Un dispositif de calcul pour architecture configurable à gros grains comprenant une pluralité de dispositifs de calcul interconnectés par un bus de données, le dispositif de calcul comprenant :
- une partie opérative (302, 304) apte à exécuter des instructions opératives d'un code applicatif, et à transmettre des données vers et recevoir des données, des dispositifs de calcul via le bus de données ;
- une mémoire programme (308) comprenant des mots mémoires, chaque mot mémoire étant composé d'un premier champ (Op) contenant une instruction à exécuter, un second champ (TS) contenant un instant d'exécution et un troisième champ (ID) contenant un identifiant de bloc d'instructions ; et
- une unité de contrôle (306), couplée à la partie opérative et à la mémoire programme, apte à piloter au sein du dispositif de calcul l'exécution d'une instruction, et à transmettre vers et recevoir d'autres unités de contrôle, des identifiants de bloc d'instructions via un bus de gestion du contrôle (GSG), ledit bus interconnectant les unités de contrôle de la pluralité des dispositifs de calcul.

2. Le dispositif selon la revendication 1 dans lequel la partie opérative comprend des composants d'exécution (302) et des composants de mémorisation (304).

3. Le dispositif selon la revendication 1 ou 2 dans lequel l'unité de contrôle comprend au moins un compteur de cycle (306-1), un pointeur d'instruction (306-2), une table de localisation (306-3) permettant de connaitre la position dans la mémoire programme de la première instruction de chaque bloc d'instructions et un registre (306-4) permettant de stocker l'identifiant du bloc d'instructions courant.

4. Le dispositif selon la revendication 3 dans lequel l'unité de contrôle 306 comprend aussi des moyens (306-5) permettant de ne pas incrémenter le pointeur d'instruction et de faire exécuter une instruction NOP.

5. Le dispositif selon l'une quelconque des revendications 1 à 4 dans lequel le bus de gestion du contrôle (GSG) permet de communiquer à la pluralité des unités de contrôle un signal signifiant que l'identifiant d'un nouveau bloc d'instructions est présent sur ledit bus.

6. Le dispositif selon l'une quelconque des revendications 1 à 5 comprenant de plus des moyens pour gérer des instructions mémoires bloquantes.

7. Le dispositif selon la revendication 6 dans lequel les moyens pour gérer des instructions mémoires bloquantes comprennent au moins un bus de freeze (FG, RCBB) interconnectant les unités de contrôle de la pluralité des dispositifs de calcul permettant de bloquer globalement ou partiellement l'exécution d'instructions.

8. Le dispositif selon l'une quelconque des revendications 1 à 7 dans lequel les mots mémoires ont des champs de taille prédéfinie.

9. Le dispositif selon l'une quelconque des revendications 1 à 8 dans lequel la mémoire programme contient une instruction de contrôle ayant un identifiant de bloc d'instructions dédié et un instant d'exécution fixé définissant le prochain bloc d'instructions à exécuter.

10. Un procédé pour opérer un dispositif de calcul selon l'une quelconque des revendications 1 à 9, le procédé comprenant au moins les étapes suivantes :
- pointer un mot mémoire dans la mémoire programme par le pointeur d'instruction de l'unité de contrôle; et
- envoyer à la partie opérative un NOP si l'identifiant du bloc d'instructions du mot pointé n'est pas le même que celui stocké dans l'unité de contrôle ou si l'instant d'exécution n'est pas le même que la valeur du compteur de cycle de l'unité de contrôle ; ou
- envoyer à la partie opérative l'instruction correspondante si l'identifiant du bloc d'instructions du mot pointé est le même que celui stocké dans le registre de l'unité de contrôle, et si l'instant d'exécution est le même que la valeur du compteur de cycle de l'unité de contrôle.

11. Le procédé selon la revendication 10 comprenant de plus dans le cas où l'instruction a été exécutée, une étape d'incrémenter le pointeur d'instruction et le compteur de cycle.

12. Le procédé selon la revendication 10 ou 11 comprenant de plus l'étape d'exécuter l'instruction de contrôle dans le cas où le pointeur d'instruction pointe vers l'instruction de contrôle.

13. Le procédé selon la revendication 12 comprenant de plus l'étape de communiquer sur le bus de gestion du contrôle (GSG) l'identifiant du bloc d'instructions et un signal indiquant qu'un nouvel identifiant de bloc d'instructions est généré.

14. Un procédé pour opérer un dispositif de calcul selon la revendication 7 comprenant au moins les étapes suivantes pour bloquer globalement l'exécution d'instructions :
- envoyer à l'unité de contrôle un signal de Load bloquant si une donnée requise n'est pas disponible en mémoire centrale ;
- passer le bus de freeze en état actif ;
- bloquer l'incrémentation du pointeur d'instruction et du compteur de cycle dans toutes les tuiles ; et
- exécuter une instruction NOP tant que la donnée requise n'est pas arrivée dans la tuile.

## Patentansprüche

1. Rechenvorrichtung für eine konfigurierbare Grobkornarchitektur, beinhaltend eine Vielzahl von Rechenvorrichtungen, die über einen Datenbus miteinander verbunden sind, wobei die Rechenvorrichtung Folgendes beinhaltet:
- ein operatives Modul (302, 304), welches in der Lage ist, operative Anweisungen eines Anwendungscodes auszuführen, und Daten an Rechenvorrichtungen über den Datenbus zu übertragen bzw. von diesen zu empfangen;
- einen Programmspeicher (308), welcher Speicherworte beinhaltet, wobei jedes Speicherwort aus einem ersten Feld (Op) besteht, welches eine auszuführende Anweisung enthält, einem zweiten Feld (TS), welches einen Ausführungszeitpunkt enthält und einem dritten Feld (ID), welches eine Anweisungsblock-Kennung enthält; und
- eine Steuereinheit (306), gekoppelt mit dem operativen Modul und dem Programmspeicher, welche in der Lage ist, innerhalb der Rechenvorrichtung die Ausführung einer Anweisung zu steuern, und anderen Steuereinheiten Anweisungsblock-Kennungen über einen Steuerungsverwaltungsbus (CSG) zu übertragen oder von diesen zu empfangen, wobei der Bus die Steuereinheiten der Vielzahl von Rechenvorrichtungen miteinander verbindet.

2. Vorrichtung nach Anspruch 1, bei welcher das operative Modul Ausführungskomponenten (302) und Speicherkomponenten (304) beinhaltet.

3. Vorrichtung nach Anspruch 1 oder 2, bei welcher die Steuereinheit mindestens einen Zykluszähler (306-1), einen Anweisungszeiger (306-2), eine Lokalisierungstabelle (306-3), welche es ermöglicht, die Position der ersten Anweisung eines Anweisungsblocks im Programmspeicher zu kennen und ein Verzeichnis (306-4) beinhaltet, welches es ermöglicht, die Kennung des augenblicklichen Anweisungsblocks zu speichern.

4. Vorrichtung nach Anspruch 3, bei welcher die Steuereinheit (306) ebenfalls Mittel (306-5) beinhaltet, die es ermöglichen, den Anweisungszeiger nicht zu inkrementieren und eine NOP-Anweisung ausführen zu lassen.

5. Vorrichtung nach einem der Ansprüche 1 bis 4, bei welcher der Verwaltungsbus der Steuerung (CSG) es ermöglicht, der Vielzahl von Steuereinheiten ein Signal zu kommunizieren, welches bedeutet, dass die Kennung eines neuen Anweisungsblocks auf dem Bus vorhanden ist.

6. Vorrichtung nach einem der Ansprüche 1 bis 5, welche zudem Mittel zum Verwalten von blockierenden Speicheranweisungen beinhaltet.

7. Vorrichtung nach Anspruch 6, bei welcher die Mittel zum Verwalten von blockierenden Speicheranweisungen mindestens einen Freeze-Bus (FG, RCBB) beinhalten, welcher die Steuereinheiten der Vielzahl von Rechenvorrichtungen miteinander verbindet, welche es ermöglichen, die Ausführung von Anweisungen global oder teilweise zu blockieren.

8. Vorrichtung nach einem der Ansprüche 1 bis 7, bei welcher die Speicherworte Felder vordefinierter Größe besitzen.

9. Vorrichtung nach einem der Ansprüche 1 bis 8, bei welcher der Programmspeicher eine Steuereanweisung enthält, welche eine zugewiesene Anweisungsblock-Kennung und einen festen Ausführungszeitpunkt enthält, welcher den nächsten auszuführenden Anweisungsblock definiert.

10. Verfahren zum Betreiben einer Rechenvorrichtung nach einem der Ansprüche 1 bis 9, wobei das Verfahren mindestens folgende Schritte beinhaltet:
- Zeigen eines Speicherwortes im Programmspeicher durch den Anweisungszeiger der Steuereinheit; und
- Senden eines NOP an das operative Modul an das operative Modul, wenn die Kennung des Anweisungsblocks des gezeigten Wortes nicht dieselbe ist wie diejenige, die in der Steuereinheit gespeichert ist, oder wenn der Ausführungszeitpunkt nicht derselbe wie der Wert des Zykluszählers der Steuereinheit ist; oder
- Senden der entsprechenden Anweisung an das operative Modul, wenn die Kennung des Anweisungsblocks des gezeigten Wortes dieselbe ist wie diejenige, die in der Steuereinheit gespeichert ist, und wenn der Ausführungszeitpunkt derselbe wie der Wert des Zykluszählers der Steuereinheit ist.

11. Verfahren nach Anspruch 10, zudem beinhaltend in dem Fall, dass die Anweisung ausgeführt wurde, einen Schritt des Inkrementierens des Anweisungszeigers und des Zykluszählers.

12. Verfahren nach Anspruch 10 oder 11, zudem beinhaltend den Schritt des Ausführens der Steueranweisung in dem Fall, dass der Anweisungszeiger auf die Steueranweisung zeigt.

13. Verfahren nach Anspruch 12, zudem beinhaltend den Schritt des Kommunizierens auf dem Steuerungsverwaltungsbus (CSG) der Kennung des Anweisungsblocks und eines Signals, welches anzeigt, dass eine neue Anweisungsblock-Kennung erzeugt wird.

14. Verfahren zum Betreiben einer Rechenvorrichtung nach Anspruch 7, beinhaltend mindestens die folgenden Schritte zur globalen Blockierung der Ausführung von Anweisungen:
- Senden an die Steuereinheit eines blockierenden Load-Signals, wenn ein erforderliches Datenelement nicht im zentralen Speicher verfügbar ist;
- Umschalten des Freeze-Busses in den aktiven Zustand;
- Blockieren der Inkrementierung des Anweisungszeigers und des Zykluszählers in allen Kacheln; und
- Ausführen einer NOP-Anweisung, so lange das erforderliche Datenelement nicht in der Kachel angekommen ist.

## Claims

1. Calculation device for a configurable coarse grained architecture, comprising a plurality of calculation devices which are interconnected by a databus, the calculation device comprising:
- an operative portion (302, 304) which is capable of executing operating instructions of an application code and transmitting data to and receiving data from the calculation devices via the databus;
- a programme memory (308) which comprises memory words, each memory word being composed of a first field (Op) which contains an instruction to be executed, a second field (TS) containing an execution time and a third field (ID) containing an identifier of an instruction block; and
- a control unit (306) which is coupled to the operative portion and to the programme memory and which is capable of driving within the calculation device the execution of an instruction and transmitting to and receiving from other control units instruction block identifiers via a control management bus (GSG), said bus interconnecting the control units of the plurality of calculation devices.

2. Device according to claim 1, wherein the operative portion comprises execution components (302) and memory components (304).

3. Device according to claim 1 or 2, wherein the control unit comprises at least one cycle counter (306-1), an instruction pointer (306-2), a location table (306-3) which enables the position to be known in the programme memory of the first instruction of each instruction block and a register (306-4) which enables the identifier of the current instruction block to be stored.

4. Device according to claim 3, wherein the control unit (306) also comprises means (306-5) which enable the instruction pointer not to be incremented and an NOP instruction to be carried out.

5. Device according to any one of claims 1 to 4, wherein the control management bus (GSG) enables a signal which indicates that the identifier of a new instruction block is present on the bus to be communicated to the plurality of control units.

6. Device according to any one of claims 1 to 5, further comprising means for controlling memory blocking instructions.

7. Device according to claim 6, wherein the means for controlling memory blocking instructions comprise at least one freeze bus (FG, RCBB) which interconnects the control units of the plurality of calculation devices which enable the execution of instructions to be blocked completely or partially.

8. Device according to any one of claims 1 to 7, wherein the memory words have fields of a predefined size.

9. Device according to any one of claims 1 to 8, wherein the programme memory contains a control instruction which has a dedicated instruction block identifier and a fixed time of execution which defines the next instruction block to be carried out.

10. Method for operating a calculation device according to any one of claims 1 to 9, the method comprising at least the following steps:
- indicating a memory word in the programme memory using the instruction pointer of the control unit; and
- sending to the operative portion a NOP if the identifier of the instruction block of the indicated word is not the same as the one stored in the control unit or if the time of execution is not the same as the value of the cycle counter of the control unit; or
- sending to the operative portion the corresponding instruction if the identifier of the instruction block of the indicated word is the same as the one stored in the register of the control unit, and if the time of execution is the same as the value of the cycle counter of the control unit.

11. Method according to claim 10, further comprising, in the event that the instruction has been executed, a step of incrementing the instruction pointer and the cycle counter.

12. Method according to claim 10 or 11, further comprising the step of executing the control instruction in the event that the instruction pointer points towards the control instruction.

13. Method according to claim 12, further comprising the step of communicating on the control management bus (GSG) the identifier of the instruction block and a signal indicating that a new instruction block identifier is generated.

14. Method for operating a calculation device according to claim 7, comprising at least the following steps for completely blocking the execution of instructions:
- sending to the control unit a blocking load signal if a required data is not available in the central store;
- moving the freeze bus into an active state;
- blocking the incrementation of the instruction pointer and the cycle counter in all the tiles; and
- executing a NOP instruction as long as the required data item has not arrived in the tile.
